(19) Europäisches Patentamt
European Patent Office
Office européen des brevets

(11) EP 0 582 223 B1

(12) EUROPEAN PATENT SPECIFICATION

(45) Date of publication and mention of the grant of the patent:
**09.10.1996 Bulletin 1996/41**

(51) Int Cl.[6]: **C08L 25/08**, C08L 51/06

(21) Application number: **93112167.7**

(22) Date of filing: **29.07.1993**

# (54) Thermoplastic resin composition

Thermoplastische Kunstharzzusammensetzung

Composition de résine thermoplastique

(84) Designated Contracting States:
**DE FR GB NL**

(30) Priority: **30.07.1992 JP 224647/92**

(43) Date of publication of application:
**09.02.1994 Bulletin 1994/06**

(73) Proprietor: **KANEGAFUCHI KAGAKU KOGYO KABUSHIKI KAISHA**
**Kita-ku Osaka-shi Osaka-fu 530 (JP)**

(72) Inventors:
- **Mishima, Ikuhiro**
  **Kakogawa-shi, Hyogo (JP)**
- **Wada, Kazuhito**
  **Akashi-shi, Hyogo (JP)**

(74) Representative: **VOSSIUS & PARTNER**
**Postfach 86 07 67**
**81634 München (DE)**

(56) References cited:
**EP-A- 0 480 069**
**EP-A- 0 518 447**
**EP-A- 0 547 288**

Note: Within nine months from the publication of the mention of the grant of the European patent, any person may give notice to the European Patent Office of opposition to the European patent granted. Notice of opposition shall be filed in a written reasoned statement. It shall not be deemed to have been filed until the opposition fee has been paid. (Art. 99(1) European Patent Convention).

EP 0 582 223 B1

## Description

The present invention relates to a thermoplastic resin composition. More particularly, this invention relates to a thermoplastic resin composition which provides molded articles having excellent delamination resistance.

Recently, resin modification techniques in which polymers having different properties are blended into an alloy are being investigated to a considerable extent see e.g. EP-A-0 518 447. For example, with respect to an alloy of an olefin resin and a styrene resin, alloying techniques that have been reported include, for example, alloying with an ethylene-vinyl acetate copolymer (JP-B-60-36178) and alloying with an EPDM-modified polyethylene (JP-A-63-304039 and JP-A-1-165640). (The terms "JP-B" and "JP-A" as used herein mean an "examined Japanese patent publication" and an "unexamined published Japanese patent application", respectively.)

However, these conventional techniques have had a problem that the surface layer of, in particular, a molded article peels off even with slight force.

As a solution of the above problem, it has surprisingly been found that when an olefin-based polymer modified with a specific compound is blended with a styrene-based resin having a functional group reactive to an epoxy group, delamination resistance is improved. The present invention has been completed based on this finding.

Accordingly, the present invention provides a thermoplastic resin composition comprising from 5 to 98 parts by weight of a styrene-based resin (A) having a functional group reactive to an epoxy group and from 95 to 2 parts by weight of a modified olefin-based polymer (B) having, per from 2 to 1,000 olefin-derived repeating units, one structural unit having at least one amide group and at least one reactive group selected from the group consisting of glycidyloxy group and glycidyl group.

Examples of the styrene-based resin (A) which has a functional group reactive to an epoxy group for use in the present invention, include one or more of ABS resins, AS resins, MABS resins, MBS resins, AAS resins, AES resins, acrylonitrile-butadiene-styrene-α-methylstyrene copolymers, acrylonitrile-methyl methacrylate-butadiene-styrene-α-methylstyrene copolymers, polystyrene, styrene-α-methylstyrene copolymers, HIPS resins, styrene-methyl methacrylate copolymers, styrene-maleic anhydride copolymers, styrene-maleimide copolymers, styrene-N-substituted maleimide copolymers, acrylonitrile-styrene-N-substituted maleimide copolymers, acrylonitrile-butadiene-styrene-β-isopropenylnaphthalene copolymers, and acrylonitrile-methyl methacrylate-butadiene-styrene-α-methylstyrene-maleimide copolymers, provided that these resins have an epoxy-reactive functional group such as, e.g., a carboxylic acid group, carboxylic acid anhydride group, carboxylic acid salt group, amine group, amide group, imide group, and epoxy group. Particularly preferred of these functional groups are a carboxylic acid group and an anhydride thereof. Such a functional group can be incorporated by a known method, e.g., by copolymerizing a monomer having the functional group or by reacting such a monomer with a polymer at active sites thereof.

In the case where impact resistance is required, it is preferred to employ a styrene-based resin (A) which contains from 0 to 70 % by weight of a graft copolymer based on a total amount of the resin, and the graft copolymer is obtained by polymerizing from 60 to 10 parts by weight of a monomer mixture with from 40 to 90 parts by weight of a rubber-like polymer, said monomer mixture being a mixture of at least one compound selected from vinyl cyanide compounds, aromatic vinyl compounds, and alkyl methacrylates with a monomer copolymerizable therewith.

Examples of the rubber-like polymer include polybutadiene rubber, styrene-butadiene rubbers (SBR), acrylonitrile-butadiene rubbers (NBR), and butyl acrylate-butadiene rubbers.

Examples of the vinyl cyanide compounds include acrylonitrile and methacrylonitrile. Examples of the aromatic vinyl compounds include styrene, methylstyrene, chlorostyrene, and α-methylstyrene. Examples of the alkyl methacrylates include methyl methacrylate and ethyl methacrylate. The rubber-like polymers and these compounds both may be used alone or in combination of two or more thereof.

It is preferred that from the standpoint of processability, the styrene-based resin (A) be one whose methyl ethyl ketone-soluble part has a reduced viscosity of from 0.2 to 1.2 dl/g (dimethylformamide solution; 30°C; concentration, 0.3 g/dl). From the standpoint of mechanical strength, it is preferred that the styrene-based resin (A) contains comonomer units derived from a vinyl cyanide compound and/or an alkyl methacrylate compound and/or an alkyl dimethacrylate compound, desirably in an amount of from 10 to 60 % by weight.

If the amount of the comonomer units derived from a vinyl cyanide compound and/or an alkyl methacrylate compound is below 10% by weight, impaired mechanical strength tends to result. On the other hand, if the amount thereof exceeds 60% by weight, flowability tends to be impaired. Reduced viscosities below 0.2 dl/g tend to result in impaired mechanical strength, while reduced viscosities above 1.2 dl/g tend to result in impaired flowability to make molding difficult.

The modified olefin-based polymer (B), which is especially important in the present invention, is a modified olefin-based polymer having, per from 2 to 1,000, preferably from 20 to 800, olefin-derived repeating units, one structural unit having at least one amide group and at least one reactive group selected from the group consisting of glycidyloxy group

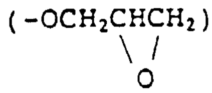

and glycidyl group

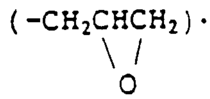

This modified olefin-based polymer can be produced by copolymerizing an olefin and a compound which has a reactive group polymerizable with the olefin, e.g., vinyl group, and further has at least one amide group and at least one glycidyloxy group and/or glycidyl group with respect to 2 to 1,000 repeating units. Alternatively, the desired polymer may be produced by first producing a polyolefin by an ordinary polymerization method and then incorporating the above-described compound, which has a reactive group polymerizable with the olefin, e.g., vinyl group, and further has at least one amide group and at least one glycidyloxy group and/or glycidyl group, into the polyolefin chain by graft polymerization in an ordinary manner. In the copolymerization or graft polymerization with an olefin, a polymerizable vinyl monomer other than the compound represented by formula (I) can be copolymerized.

Such a modified olefin-based polymer is explained below with respect to examples thereof to illustrate the present invention in detail.

Examples of the modified olefin-based polymer include an olefin-based polymer modified with a compound represented by the following formula (I):

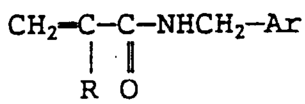
(I)

(wherein Ar represents

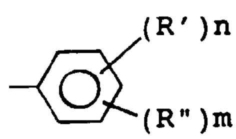

(where R' is selected from alkyl group having 1 to 4 carbon atoms, R" is glycidyl or glycidyloxy group, n is 0 or an integer from 1 to 4, preferably 0 or 1, and m is an integer from 1 to 3, preferably 1, and when m or n takes 2 or more, R' and R" can be the same or different), and R represents hydrogen atom or methyl group).

A more specific example of the modified olefin-based polymer to be used in the present invention is a modified olefin-based polymer which has been obtained by the copolymerization of a compound represented by formula (I) with an olefin-based polymer and which has, per from 2 to 1,000 olefin-derived repeating units, one structural unit having a glycidyloxy group and/or a glycidyl group and represented by the following formula (II):

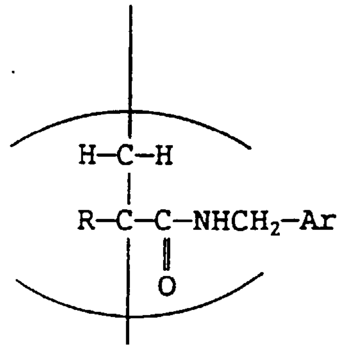 (II)

(wherein Ar represents a $C_6$-$C_{23}$ aromatic hydrocarbon group having at least one reactive group selected from the group consisting of glycidyloxy group and/or glycidyl group, and represents hydrogen atom or methyl group).

The compound represented by formula (I) can be produced by a method such as that described in JP-A-60-130580.

That is, a compound represented by the following formula (III):

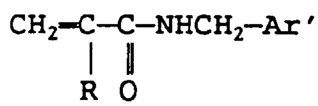 (III)

(wherein Ar' represents

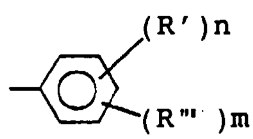

(where R''' is hydroxy or alkoxy group and R, R', m and n are as defined in formula (I) when n or m takes 2 or more, R' and R''' can be the same or different), is caused to add an epihalohydrin, and the adduct is then subjected to a dehydrohalogenation reaction using an alkali, thereby to produce the desired compound.

For example, in the case of employing 2,6-xylenol-N-methylolacrylamide as the starting material, the compound shown by the following formula (IV) can be obtained.

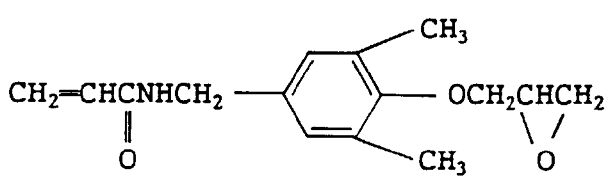

Although processes for the production of a copolymer of a compound of formula (I) with an olefin-based polymer are not particularly limited, the following two processes can be advantageously utilized.

A first process is the graft-modification of an olefin-based polymer, while a second process is the copolymerization of an olefin monomer and a glycidyl group-containing compound represented by formula (I).

In the first process, a composition comprising the two ingredients, i.e., an olefin-based polymer and a glycidyl group-containing compound represented by formula (I), is subjected to radical addition using a free-radical initiator.

For this reaction, a solvent capable of dissolving or swelling the olefin-based polymer may be used, such as, e.g., tetralin, decalin, toluene, xylene, or chlorobenzene.

The first process may, for example, be carried out by melt-kneading the olefin-based polymer and the compound of formula (I) by means of any of conventionally known various blenders such as, e.g., an extruder, heated rolls, Brabender, and Banbury mixer.

In the second process, an olefin monomer and a glycidyl group-containing compound represented by formula (I) are copolymerized.

Methods for this copolymerization are not particularly limited, and coordination polymerization or the like using a transition metal can be employed as well as commonly used polymerization techniques such as radical polymerization, cationic polymerization, and anionic polymerization.

The modified olefin-based polymer, which can be produced by either the radical addition of a compound represented by formula (I) to an olefin-based polymer or the copolymerization of an olefin monomer and a compound represented by formula (I), may be either a graft copolymer or a block copolymer or other polymer. It is, however, preferable that any of these polymers have, per from 2 to 1,000 olefin-derived repeating units, one structural unit having a glycidyloxy group and/or a glycidyl group represented by formula (II).

If the number of the structural unit of formula (II) incorporated by random or graft copolymerization is 1 or smaller per 1,000 olefin-derived repeating units, the modification of the olefin-based polymer is insufficient, so that the modified olefin-based polymer cannot produce a sufficient delamination resistance-improving effect when blended with a stylene-based resin.

Examples of the olefin-based polymer to be used as a raw material for the modified olefin-based polymer for use in the present invention include homopolymers, random copolymers, block copolymers, or graft copolymers of various olefin monomers and mixtures of these homopolymers or copolymers. Specific examples thereof include such polyolefins and oligomers as high-density polyethylene, medium-density polyethylene, low-density polyethylene, copolymers of ethylene and other α-olefins, polybutene, polypropylene, copolymers of propylene and other α-olefins, and poly(4-methylpentene-1) and polyolefin elastomers such as ethylene-propylene rubbers, ethylene-propylene-diene rubbers, ethylene-vinyl acetate copolymers, butyl rubber, butadiene rubber, propylene-butene copolymers, and ethylene-acrylic ester copolymers. These may be used alone or in combination of two or more thereof. Preferred of these from the standpoints of impact resistance and heat resistance are low-density polyethylene, polypropylene, copolymers of propylene and α-olefins, and oligomers thereof. Especially preferred are polypropylene, copolymers of propylene and other α-olefins, and oligomers thereof.

Although the olefin-based polymer is not particularly limited in stereostructure, the isotactic content of the polymer is preferably 60% by weight or higher, more preferably 70% by weight or higher, from the standpoint of heat resistance. The molecular weight of the olefin-based polymer is preferably from 500 to 60,000, more preferably from 1,000 to 50,000, in terms of number-average molecular weight from the standpoints of impact resistance and flowability. The number-average molecular weight can be measured by GPC (gel permeation chromatography).

The polymerization for producing the styrene-based resin (A) and that for producing the olefin resin to be used as a raw material for the modified olefin-based resin (B) each may be carried out by a known polymerization method, which is not particularly limited in kind and operation. After completion of the polymerization, the desired resins are obtained as a powder by a known technique.

In the thermoplastic resin composition of the present invention, the amount of the modified olefin-based polymer (B) is from 95 to 2 parts by weight per 5 to 98 parts by weight of the styrene-based resin (A). The preferred range of the polymer (B) amount is from 90 to 10 parts by weight per 10 to 90 parts by weight of resin (A). If the polymer (B) amount is below 2 parts by weight, the effect of improving processability cannot be produced. If the amount thereof exceeds 95 parts by weight, the properties of either the styrene-based resin or the olefin resin are lost.

The thermoplastic resin composition of the present invention can be obtained by blending the styrene-based resin (A) and the modified olefin-based polymer (B) both in powder form along with additive ingredients. This blending is not particularly limited in operation, and can be, conducted by any conventional manner.

As a described above, the thermoplastic resin composition of the present invention is characterized in that an olefin-based polymer (B) modified with a compound of a specific structure represented by formula (I) has been incorporated as an essential component into a styrene-based resin (A).

Additives such as a UV absorber, pigment, antistatic agent, flame retardant, and flame retardation aid can be suitably incorporated according to need into the thermoplastic resin composition of the present invention, as well as ordinarily well known additives such as an antioxidant, heat stabilizer, and lubricant. In order to enable the thermoplastic resin composition of the present invention to be used as a molding resin having higher performance, it is particularly advantageous to use a phenolic antioxidant and phosphite stabilizer for use with styrene resins and olefin resins and to use internal and external lubricants, e.g., various fatty acid esters, metal soaps, and waxes, and the like.

The present invention will be explained below in more detail by reference to the following examples. In these examples, all parts and percents are by weight.

EXAMPLE 1

(1) Production of Styrene-based Resin (A)

Into a polymerization vessel equipped with a stirrer and a cooler were introduced, under a nitrogen atmosphere, 250 parts of water, 2 parts of sodium dodecylbenzenesulfonate, 0.01 part of disodium ethylenediaminetetraacetate,

0.0025 part of ferrous sulfate, and 0.4 part of sodium formaldehydesulfoxylate. Further, 10 parts of styrene, 60 parts of α-methylstyrene, 25 parts of acrylonitrile, and 5 parts of methacrylic acid were continuously added dropwise over a period of 5 hours at a polymerization temperature of 60°C along with 0.35 part of cumene hydroperoxide as an initiator and 0.45 part of t-dodecyl mercaptan as a chain transfer agent. After completion of the dropwise addition, stirring was continued further at 60°C for 1 hour and the polymerization was then ceased, thereby obtaining a latex of a styrene resin (Aa).

On the other hand, into another polymerization vessel equipped with a stirrer and a cooler were introduced, under a nitrogen atmosphere, 250 parts of water, 60 parts of polybutadiene latex, 0.01 part of disodium ethylenediaminetetraacetat, 0.0025 part of ferrous sulfate, and 0.2 part of sodium formaldehydesulfoxylate. Further, 30 parts of styrene and 10 parts of acrylonitrile were continuously added dropwise over a period of 5 hours at a polymerization temperature of 60°C along with 0.25 part of cumene hydroperoxide as an initiator. After completion of the dropwise addition, stirring was continued further at 60°C for 1 hour and the polymerization was then ceased, thereby obtaining a latex of a styrene resin (Ab).

The two latexes obtained were mixed in a ratio of (Aa)/(Ab) = 2/1. This mixture was subjected to salting-out, dehydration, and drying to obtain a styrene resin (A1).

(2) Production of Modified Olefin-Based Polymer (B)

100 Parts of an olefin-based polymer (polypropylene J-900, manufactured by Mitsui Petrochemical Industries, Ltd., Japan) was dry-blended with 10 parts of the compound of structural formula (IV) and 0.1 part of α,α-(t-butylperoxy-m-isopropyl)benzene (Perbutyl P, manufactured by Nippon Oil & Fats Co., Ltd., Japan). The blend was fed to a twin-screw extruder regulated at 210°C, and the resulting extrudate was cooled with water, pelleted, and then dried at 70°C for 12 hours at a reduced pressure, thereby obtaining a modified olefin-based polymer (B1).

The dry pellets thus obtained were ground and then washed with acetone five times to remove the unreacted compound of structural formula (IV) and its homopolymer. From an infrared spectrum and an elemental analysis for determining nitrogen atom content in the resin, the grafted compound amount in the modified polypropylene was found to be 4.1%. This modified polypropylene had one structural unit derived from the compound of structural formula (IV) per 110 olefin-derived repeating units.

(3) Production of Thermoplastic Resin Composition

Using a 20-liter Henschel mixer, 50 parts each of the thus-obtained styrene resin (A1) and modified olefin-based polymer (B1) were blended. The blend was extruded with a twin-screw extruder at 230°C to obtain pellets of a thermoplastic resin composition according to the present invention.

EXAMPLES 2 TO 7 AND COMPARATIVE EXAMPLES 1 TO 3

Using the styrene resins (A) shown in Table 1 and the modified olefin-based polymers (B) shown in Table 2, pelleted thermoplastic resin compositions whose compositions are shown in Table 3 were prepared in the same manner as in Example 1.

Reduced viscosity was measured by the following method.

(Reduced Viscosity)

The methyl ethyl ketone-soluble part of a styrene resin was dissolved in N,N-dimethylformamide at a concentration of 0.3 g/dl. The resulting polymer solution was subjected to viscosity measurement at 30°C with an Ubbelohde viscometer (an automatic capillary viscometer manufactured by Shibayama Kagaku-Kiki Seisakusho K.K., Japan) in accordance with JIS-K6721 to measure the flow-down time for the solution (t). On the other hand, the flow-down time for the solvent N,N-dimethylformamide ($t_0$) was also measured at 30°C with the same apparatus. The reduced viscosity ($\eta_{red}$) was calculated using the following equation:

$$\eta_{red} = (t/t_0 - 1)/C$$

where C is the concentration (g/dl) of the polymer solution.

Test pieces were then formed from the pellets produced by the method described above, using a 5-ounce injection molding machine at a nozzle temperature of 230°C.

The test pieces were examined for various properties by the methods given below. The results obtained are summarized in Table 3.

The delamination properties of each molded piece, which was in the form of a flat plate having a thickness of 1.2 mm, were examined by visually evaluating peelability from the gate part in five grades, with the best one being rated as 5 and the worst as 1. That is, the larger the rating number, the better the delamination resistance.

Flowability was evaluated using the above-mentioned molding machine and a spiral-cavity mold having a cavity thickness of 3 mm and a cavity width of 10 mm, in terms of flow distance in the mold.

Mechanical strength was evaluated in terms of elongation by a tensile test in accordance with ASTM D-638.

The results summarized in Table 3 show that the compositions according to the present invention give molded articles having good delamination resistance and, at the same time, are excellent in both flowability and elongation.

The abbreviations in Table 1 respectively have the following meanings.

PBD: polybutadiene rubber
AN: acrylonitrile
MMA: methyl methacrylate
St: styrene
PMI: N-phenylmaleimide
αSt: α-methylstyrene
GMA: glycidyl methacrylate
MAA: methacrylic acid
PBA: poly(butyl acrylate) rubber
EPR: ethylene-propylene rubber

Table 1

| Styrene resin (A) | | | | | | | | |
|---|---|---|---|---|---|---|---|---|
| | | A1 | A2 | A3 | A4 | A5 | A6 | A7 |
| Aa | St | 10 | 10 | 50 | 10 | 75 | 10 | 10 |
| | αSt | 60 | 60 | - | 60 | - | 60 | 60 |
| | AN | 25 | 24 | 15 | 25 | 20 | 25 | 25 |
| | MMA | - | 10 | - | - | - | - | - |
| | PMI | - | - | 30 | - | - | - | - |
| | MAA | 5 | - | 5 | 5 | 5 | 4 | - |
| | GMA | - | 1 | - | - | - | - | - |
| Ab | PBD | 60 | 60 | 60 | - | 60 | 60 | 60 |
| | PBA | - | - | - | 30 | - | - | - |
| | EPR | - | - | - | 30 | - | - | - |
| | AN | 10 | - | 10 | 10 | 10 | 10 | 10 |
| | St | 30 | 10 | 30 | 30 | 30 | 30 | 30 |
| | MMA | - | 30 | - | - | - | - | - |
| | MAA | - | - | - | - | - | 1 | - |
| Reduced viscosity | | 0.55 | 0.51 | 0.56 | 0.56 | 0.56 | 0.53 | 0.57 |

Table 2

| Olefin-based polymer (B) | | | | |
|---|---|---|---|---|
| | B1 | B2 | B3 | B4 |
| Polypropylene* | 100 | - | 100 | - |
| Ethylene-propylene copolymer** | - | 100 | - | 100 |
| Compound (IV)* | 10 | 10 | - | - |

* "Polypro Hipol J-900" manufactured by Mitsui Petrochemical Industries, Ltd.

** "Polypro Hipol J-940" manufactured by Mitsui Petrochemical Industries, Ltd.

Table 3

Composition and properties of thermoplastic resin composition

| | | Composition of thermoplastic resin composition | | | | | | | | | | | Properties of thermoplastic resin composition | | |
|---|---|---|---|---|---|---|---|---|---|---|---|---|---|---|---|
| | | Styrene resin (A) | | | | | | | Modified olefin-based polymer (B) | | | | Delamination property | Flowability (mm) | Elongation (%) |
| | | A1 | A2 | A3 | A4 | A5 | A6 | A7 | B1 | B2 | B3 | B4 | | | |
| Example | 1 | 50 | - | - | - | - | - | - | 50 | - | - | - | 5 | 1210 | 38 |
| | 2 | 50 | - | - | - | - | - | - | - | 50 | - | - | 4 | 1320 | 25 |
| | 3 | - | 50 | - | - | - | - | - | 50 | - | - | - | 5 | 1260 | 46 |
| | 4 | - | - | 50 | - | - | - | - | 50 | - | - | - | 4 | 1260 | 38 |
| | 5 | - | - | - | 50 | - | - | - | 50 | - | - | - | 5 | 1300 | 58 |
| | 6 | - | - | - | - | 50 | - | - | 50 | - | - | - | 5 | 1360 | 38 |
| | 7 | - | - | - | - | - | 50 | - | 50 | - | - | - | 5 | 1180 | 46 |
| Comparative Example | 1 | - | - | - | - | - | - | 50 | - | - | 50 | - | 1 | 1340 | 3 |
| | 2 | 50 | - | - | - | - | - | - | - | - | 50 | - | 1 | 1310 | 5 |
| | 3 | - | - | - | - | - | - | 50 | - | - | - | 50 | 1 | 1360 | 4 |

Since the thermoplastic resin composition of the present invention is excellent in mechanical strength, delamination resistance, and flowability, it has the effect of being advantageously usable for producing molded articles susceptible to delamination, such as, e.g., injection-molded articles.

## Claims

1. A thermoplastic resin composition comprising from 5 to 98 parts by weight of a styrene-based resin (A) having a functional group reactive to an epoxy group, and from 95 to 2 parts by weight of a modified olefin-based polymer (B) having, per from 2 to 1,000 olefin-derived repeating units, one structural unit having at least one amide group and at least one reactive group selected from the group consisting of glycidyloxy group and glycidyl group.

2. A thermoplastic resin composition as claimed in claim 1, wherein the olefin-based polymer (B) is an olefin resin modified with a compound represented by formula (I)

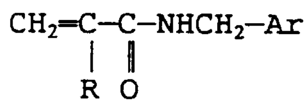

(I)

(wherein Ar represents

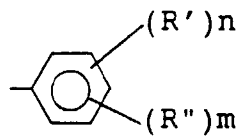

(where R' is selected from an alkyl group having 1 to 4 carbon atoms, R" is a glycidyl or glycidyloxy group, n is 0 or an integer from 1 to 4, m is an integer from 1 to 3, when n or m takes 2 or more, R' and R" can be the same or different, respectively) and R represents hydrogen atom or methyl group).

3. A thermoplastic resin composition as claimed in claim 1 or 2, wherein the styrene-based resin (A) has a methyl ethyl ketone-soluble part having a reduced viscosity of from 0.2 to 1:2 dl/g (as measured at 30°C on 0.3 g/dl solution in dimethylformamide).

4. A thermoplastic resin composition as claimed in any one of claims 1 to 3, wherein the styrene-based resin (A) contains comonomer units derived from a vinyl cyanide compound and/or an alkyl dimethacrylate compound.

5. A thermoplastic resin composition as claimed in any one of claims 1 to 3, wherein the styrene-based resin (A) contains from 10 to 60% by weight of comonomer units derived from a vinyl cyanide compound and/or an alkyl methacrylate compound.

6. A thermoplastic resin composition as claimed in any one of claims 1 to 5, wherein the styrene-based resin (A) contains from 0 to 70 % by weight of a graft copolymer based on a total amount of the resin, the graft copolymer being obtained by polymerizing from 60 to 10 parts by weight of a monomer mixture with from 40 to 90 parts by weight of a rubber-like polymer, said monomer mixture being a mixture of at least one compound selected from vinyl cyanide compounds, aromatic vinyl compounds, and alkyl methacrylates with a monomer copolymerizable therewith.

7. A thermoplastic resin composition as claimed in claims 1 to 6, wherein the epoxy-reactive functional group of the styrene-based resin (A) is a carboxylic acid and an anhydride thereof.

## Patentansprüche

1. Thermoplastische Harzmasse, umfassend 5 bis 98 Gewichtsteile eines Harzes auf Styrolbasis (A) mit einer funktionellen Gruppe, die mit einer Epoxygruppe reagieren kann, und 95 bis 2 Gewichtsteile eines modifizierten Polymers auf Olefinbasis (B), das pro 2 bis 1000 Olefingrundeinheiten eine Struktureinheit mit mindestens einer Amidgruppe und mindestens einer aus einer Glycidyloxygruppe und einer Glycidylgruppe ausgewählten reaktiven Gruppe enthält.

**2.** Thermoplastische Harzmasse nach Anspruch 1, in der das Polymer auf Olefinbasis (B) ein Olefinharz ist, das mit einer Verbindung der Formel (I) modifiziert ist

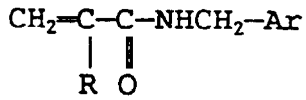

(I)

(in der Ar

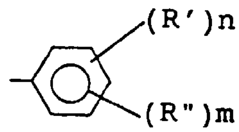

ist (wobei R' aus einem Alkylrest mit 1 bis 4 Kohlenstoffatomen ausgewählt ist, R" eine Glycidyl- oder Glycidyloxygruppe ist, n 0 oder eine ganze Zahl von 1 bis 4 ist, m eine ganze Zahl von 1 bis 3 ist, R' und R" gleich beziehungsweise verschieden sein können, wenn n oder m 2 oder größer sind) und R ein Wasserstoffatom oder eine Methylgruppe ist).

**3.** Thermoplastische Harzmasse nach Anspruch 1 oder 2, in der das Harz auf Styrolbasis (A) einen in Methylethylketon löslichen Teil mit einer reduzierten Viskosität von 0.2 bis 1.2 dl/g hat (gemessen bei 30°C in einer Lösung von 0.3 g/dl in Dimethylformamid).

**4.** Thermoplastische Harzmasse nach einem der Ansprüche 1 bis 3, in der das Harz auf Styrolbasis (A) Comonomereinheiten enthält, die von einer Vinylcyanidverbindung und/oder einer Alkyldirnethacrylatverbindung abgeleitet sind.

**5.** Thermoplastische Harzmasse nach einem der Ansprüche 1 bis 3, in der das Harz auf Styrolbasis (A) 10 bis 60 Gew.-% an Comonomereinheiten enthält, die von einer Vinylcyanidverbindung und/oder einer Alkylmethacrylatverbindung abgeleitet sind.

**6.** Thermoplastische Harzmasse nach einem der Ansprüche 1 bis 5, in der das Harz auf Styrolbasis (A) 0 bis 70 Gew.-% eines Pfropfcopolymeren enthält, bezogen auf die Gesamtmenge des Harzes, wobei das Pfropfcopolymer durch Polymerisation von 60 bis 10 Gewichtsteilen eines Monomerengemisches mit 40 bis 90 Gewichtsteilen eines kautschukartigen Polymers gewonnen wird, wobei das Monomerengemisch ein Gemisch aus mindestens einer Verbindung, ausgewählt aus Vinylcyanidverbindungen, aromatischen Vinylverbindungen und Alkylmethacrylaten, mit einem damit copolymerisierbaren Monomer ist.

**7.** Thermoplastische Harzmasse nach Anspruch 1 bis 6, in der die funktionelle Gruppe des Harzes auf Styrolbasis (A), die mit einer Epoxygruppe reagieren kann, eine Carbonsäure und ein Anhydrid davon ist.

## Revendications

**1.** Composition de résine thermoplastique constituée par 5 à 98 parties en masse d'une résine (A) à base de styrène ayant un groupe fonctionnel réactif vis-à-vis d'un groupe époxy, et par 95 à 2 parties en masse d'un polymère (B) à base d'oléfine modifiée ayant, pour chaque 2 à 1 000 motifs dérivés d'oléfine, un motif ayant au moins un groupe amide et au moins un groupe réactif choisi dans le groupe constitué par le groupe glycidyloxy et le groupe glycidyle.

**2.** Composition de résine thermoplastique selon la revendication 1, dans laquelle le polymère (B) à base d'oléfine est une résine oléfinique modifiée par un composé représenté par la formule (I)

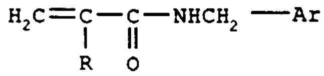 (I)

(dans laquelle Ar représente

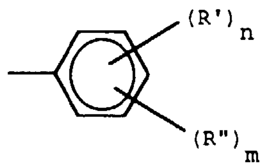

(où R' est choisi parmi un groupe alkyle ayant 1 à 4 atomes de carbone, R" est un groupe glycidyle ou un groupe glycidyloxy, n est égal à 0 ou est un entier allant de 1 à 4, m est un entier allant de 1 à 3, quand n ou m prennent la valeur 2 ou plus, R' et R" peuvent être identiques ou différents, respectivement) et R représente l'atome d'hydrogène ou le groupe méthyle).

3. Composition de résine thermoplastique selon la revendication 1 ou 2, dans laquelle la résine à base de styrène (A) a une partie soluble dans la méthyléthylcétone ayant une viscosité réduite, mesurée à 30°C sur une solution à 0,3 g/dl dans le diméthylformamide, située entre 0,2 et 1,2 dl/g.

4. Composition de résine thermoplastique selon une quelconque des revendications 1 à 3, dans laquelle la résine à base de styrène (A) contient des unités comonomères dérivées de cyanure de vinyle et/ou de diméthacrylate d'alkyle.

5. Composition de résine thermoplastique selon une quelconque des revendications 1 à 3, dans laquelle la résine à base de styrène (A) contient 10 à 60 % en masse d'unités comonomères dérivées de cyanure de vinyle et/ou de méthacrylate d'alkyle.

6. Composition de résine thermoplastique selon une quelconque des revendications 1 à 5, dans laquelle la résine à base de styrène (A) contient 0 à 70 % en masse, par rapport à la quantité totale de résine, d'un copolymère greffé, le copolymère greffé étant obtenu par la polymérisation de 60 à 10 parties en masse d'un mélange de monomères avec 40 à 90 parties en masse d'un polymère du type caoutchouc, ledit mélange de monomères étant un mélange d'au moins un composé choisi parmi les composés du cyanure de vinyle, les composés vinyliques aromatiques et les méthacrylates d'alkyle avec un monomère copolymérisable avec lui.

7. Composition de résine thermoplastique selon les revendications 1 à 6, dans laquelle le groupe fonctionnel réactif vis-à-vis des époxy de la résine à base de styrène (A) est un acide carboxylique ou un anhydride d'un tel acide.